# EUROPÄISCHE PATENTSCHRIFT

(11) **EP 1 364 769 B1**
(45) Veröffentlichungstag und Bekanntmachung des Hinweises auf die Patenterteilung: **23.01.2008**
(21) Anmeldenummer: 03010155.4
(22) Anmeldetag: 06.05.2003
(51) Int. Cl.: B29C 65/74, B26D 7/10, B26F 3/08

(54) **Einrichtung zum Bearbeiten von Folienbahnen**
Apparatus for working webs
Appareil pour le travail de matériaux en bandes

(30) Priorität: 24.05.2002 DE 10224360
(43) Veröffentlichungstag der Anmeldung: 26.11.2003
(73) Patentinhaber: KALLFASS VERPACKUNGSMASCHINEN GmbH & Co., D-72622 Nürtingen-Zizishausen (DE)
(72) Erfinder: Storck, Dominique, 67270 Wilwisheim (FR); Kallfass, Jens, 72622 Nürtingen (DE)
(74) Vertreter: Patentanwälte Ruff, Wilhelm, Beier, Dauster & Partner

(56) Entgegenhaltungen:
- DE-B- 1 121 918
- FR-A- 1 039 842
- US-A- 3 269 278
- US-A- 4 070 222
- US-A- 4 259 134
- US-A- 4 308 087
- US-A- 4 687 532

## Beschreibung

Die Erfindung betrifft eine Einrichtung mit einer Verschweißeinrichtung und einer Trenneinrichtung zum Bearbeiten von Folienbahnen. Insbesondere werden die Folienbahnen miteinander verbunden zu einem doppellagigen Verbund und anschließend mit einer bestimmten seitlichen Breite getrennt.

Derartige Einrichtungen werden verwendet um Gegenstände, beispielsweise Kartons oder Waren allgemein, in Folienschläuche einzuhüllen, die aus zwei Folienbahnen oder Halbschlauchfolien gebildet werden, deren Kanten miteinander verschweißt werden. Da hierfür in der Regel Folienbahnen mit gleicher Breite verwendet werden, die darin einzuhüllenden Gegenstände jedoch unterschiedliche, insbesondere auch geringere, Breiten aufweisen können, weisen die Folienbahnen neben der Verbindungsschweißung einen Überstand auf. Dieser ist abzutrennen.

Hierbei sind vielerlei Umstände zu berücksichtigen, damit das Abtrennen zuverlässig und mit geringem Aufwand vorgenommen werden kann.

Die US 4,259,134 zeigt eine Schneideeinrichtung für Folien mit einer feststehenden Klinge. Die feststehende Klinge ist als eine Art Metallbrücke ausgebildet und wird von Strom durchflossen, so dass die Klinge selber die Heizung ist. Gleichzeitig wird auch, da die gesamte Klinge beheizt wird, die Verschweißung durch sie durchgeführt.

Die US 3,269,278 beschreibt eine Verschweißeinrichtung für Folienbahnen, bei der umlaufende Verschweißmittel über und unter der Ebene der Folienbahnen angeordnet sind und die Folienbahnen zwischen sich zusammendrücken. Dabei liegen die umlaufenden Verschweißmittel aneinander an. Eines der Verschweißmittel ist dabei beheizt, so dass die Folienbahnen miteinander verschweißt werden. Kurz hinter den umlaufenden Verschweißmitteln sind Rollmesser vorgesehen, die gegen eine Gegenwalze drücken mit den Folienbahnen dazwischen, so dass die Folienbahnen durchgeschnitten werden.

### Aufgabe und Lösung

Der Erfindung liegt die Aufgabe zugrunde, eine eingangs genannte Einrichtung zu schaffen, mit der das Schneiden oder Abtrennen eines Folienüberstandes leicht und mit zufriedenstellendem Ergebnis möglich ist, wobei sich der Aufwand in Grenzen halten sollte.

Gelöst wird diese Aufgabe durch eine Einrichtung mit den Merkmalen des Anspruchs 1. Vorteilhafte sowie bevorzugte Ausgestaltungen der Erfindung sind Gegenstand der weiteren Ansprüche und werden im folgenden näher erläutert. Der Wortlaut der Ansprüche wird durch ausdrückliche Bezugnahme zum Inhalt der Beschreibung gemacht.

Erfindungsgemäß weist die Verschweißeinrichtung eine Heizung auf, um durch Wärmeeinwirkung auf bekannte Art und Weise die Folienbahnen miteinander zu verbinden oder zu verschweißen. Dadurch können die Folienbahnen in einem länglichen Bereich miteinander verbunden werden, insbesondere durchgehend. Die Trenneinrichtung weist eine Klinge auf, welche feststehend ist bzw. fest angeordnet ist. Diese Klinge wiederum weist eine Schneide mit einer Schneidkante auf. Durch die Schneidkante erfolgt der Schnitt durch die Folienbahnen, beispielsweise ein Abtrennen eines Überstandes oder einer Verbindungsschweißung. Des weiteren ist die Klinge bzw. die Schneide beheizt. Dies ermöglicht einen verbesserten Schnitt durch die Folienbahnen sowie ein verbessertes Schnittergebnis. Die Klinge und die ganze Einrichtung sind dabei ausschließlich nur zum Durchtrennen und nicht für weitere Aufgaben, beispielsweise ein Verschweißen, ausgebildet.

Vorteilhaft besteht eine solche Klinge aus Metall. Hier bietet sich vorzugsweise Kupfer an, insbesondere wegen Wärmeleiteigenschaften. Die Klinge kann auch aus Stahl oder Werkzeugstahl bestehen.

Besonders vorteilhaft ist die Klinge dauerbeheizt. Besonders vorteilhaft wird sie auf konstanter Temperatur gehalten, um so das Schneidergebnis gleichbleibend zu halten.

Um den Aufwand für die Einrichtung zu begrenzen, ist die Klinge wärmeleitend mit der Heizung der Verschweißeinrichtung verbunden. Somit können mit einer Heizung sowohl die Verschweißeinrichtung als auch die Klinge beheizt werden. Zusätzliche oder separate Heizungen für die Klinge können entfallen. Die wärmeleitende Verbindung ist eine durchgehende Wärmebrücke zwischen der Heizung der Verschweißeinrichtung und der Klinge. Dabei reicht die Wärmebrücke in der Nähe der Schneide an die Klinge. Eine Möglichkeit zur Ausbildung einer Wärmebrücke ist aus Metall, insbesondere aus möglichst gut wärmeleitendem Metall. Die Wärmebrücke kann weitere funktionale Aufgaben übernehmen, beispielsweise kann sie Teil einer Halterung oder Befestigung für die Klinge sein. Die Wärmebrücke kann Teil der Trenneinrichtung oder der Klinge sein. Beispielsweise kann sie einteilig, insbesondere einstückig, mit der Klinge verbunden sein.

Die Klinge mit der Schneidkante reicht vorteilhaft durch die Folienbahn hindurch. Besonders vorteilhaft reicht sie ein gutes Stück hindurch, beispielsweise bis zu einem Zentimeter. Dadurch ist gewährleistet, dass die Folienbahn nicht immer nur an genau einem Punkt der Schneide anliegt bzw. bei einem leichten Versatz immer noch geschnitten wird.

Die Schneidkante kann zumindest teilweise schräg zu der Ebene der Folienbahnen verlaufen. Ein Winkel kann zwischen 10° und 50° liegen, vorteilhaft liegt er in einem Bereich zwischen 15° und 35°. Die Schrägneigung der Schneidkante relativ zu den Folienbahnen kann so sein, dass die Schneidkante in Durchlaufrichtung der Folienbahnen und schräg zu den Folienbahnen hin geneigt ist. So kann ein vorteilhaftes Schneidergebnis erzielt werden.

Bei einer weiteren Ausbildung der Klinge oder Schneide kann die Schneidkante eine winklige Kerbenform aufweisen. Der Winkel bzw. Scheitel liegt hierbei in etwa in der Ebene der Folienbahnen. Dadurch wird gewährleistet, dass sich die Folienbahn beim Einlaufen in die Klinge oder Schneidkante selber ausrichtet, sozusagen selber zentriert. Vorteilhaft verlaufen beide Winkelschenkel ähnlich oder gleich schräg zur der Ebene der Folienbahnen.

In weiterer Ausgestaltung der Klinge kann vorgesehen sein, dass sie bzw. die Schneidkante mit einer Antihaft- oder Gleitbeschichtung versehen ist. Dadurch kann zum einen die Schneidwirkung verbessert werden. Zum anderen kann vor allem bei einem Aufheizen der Klinge ein Anhaften der Folien vermieden werden. Bei einer Beschichtung der Schneidkante ist es von Vorteil, den gesamten Bereich der Klinge im Bereich der Schneidkante zu beschichten.

Die Verschweißeinrichtung selber weist erfindungsgemäß umlaufende Verschweißmittel auf. Eines der Verschweißmittel verläuft über und eines der Verschweißmittel unter der Ebene der Folienbahnen. Diese beiden Schweißmittel drücken die Folienbahnen zwischen sich zusammen nach Art von aneinander anliegenden Rädern. Durch die Heizung der Verschweißeinrichtung, mit der mindestens eines der Verschweißmittel oder Räder beheizt wird, wird die Folie erwärmt und miteinander verschweißt.

Vorteilhaft ist die Trenneinrichtung mit kurzem Abstand hinter den Verschweißmitteln angeordnet. Ein solcher kurzer Abstand kann vorteilhaft einige wenige Zentimeter betragen. Dies weist den Vorteil auf, dass zum einen die vorgenannte wärmeleitende Verbindung nicht so lang ausgeführt zu sein braucht. Des weiteren kann hier eine eventuell vorhandene Restwärme der Folie mit einem ähnlichen Effekt genutzt werden wie die Beheizung der Klinge.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird.

### Kurzbeschreibung der Zeichnung

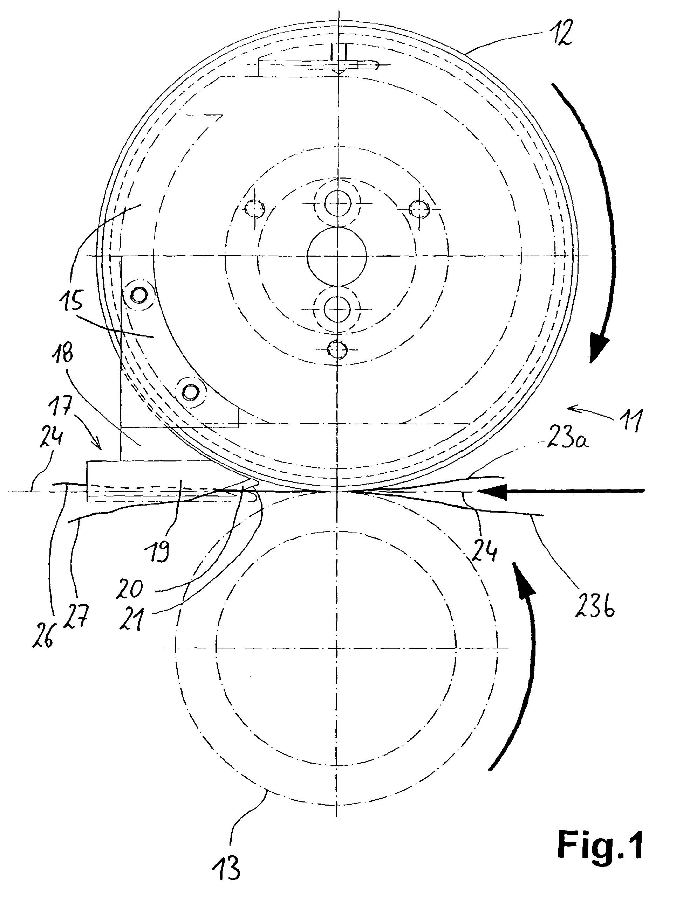

Ein Ausführungsbeispiel der Erfindung ist in der Zeichnung dargestellt und wird im folgenden näher erläutert. In der Fig. 1 ist eine Verschweißeinrichtung mit einer Heizung sowie eine damit verbundene Trenneinrichtung in Form einer Klinge zum Verschweißen von Folienbahnen und Abtrennen eines Überstandes dargestellt.

### Detaillierte Beschreibung des Ausführungsbeispiels

In Fig. 1 ist eine Verschweißeinrichtung 11 für Folien dargestellt, wie sie beispielsweise aus der EP 0 101 558.5 hervorgeht. Sie weist ein oberes Verschweißrad 12 auf sowie ein unteres Verschweißrad 13, das als Gegenrad dient. Die Verschweißräder 12 und 13 drehen sich gegensinnig, wie durch die dicken Pfeile dargestellt ist.

Das obere Verschweißrad 12 ist mit einer Heizung 15 versehen. Die Heizung 15 ist kreisringsegmentförmig ausgebildet und erstreckt sich über einen gewissen radialen Bereich. In einem unteren Bereich ist sie mit einer eckigen Verbreiterung versehen. Diese reicht bis an die Wärmebrücke 18 heran. Die Funktion dieser Heizung sowie mögliche Ausführungsformen gehen ebenfalls aus der zuvor genannten europäischen Patentanmeldung hervor, auf die zu diesem Zweck ausdrücklich verwiesen wird.

Links neben der Verschweißeinrichtung 11 und somit in Durchlaufrichtung der Folie, welche durch den dicken geraden Pfeil rechts in der Zeichnung verdeutlicht wird, hinter der Verschweißeinrichtung befindet sich die Trenneinrichtung 17. Diese ist zum einen mittels der symbolisch dargestellten Wärmebrücke 18 mit der Heizung 15 verbunden. Die Trenneinrichtung 17 weist eine Klinge 19 auf, welche mit der Wärmebrücke 18 zum einen wärmeleitend verbunden ist. Des weiteren kann aus der Zeichnung entnommen werden, dass die Klinge 19 an der Wärmebrücke 18 gehaltert ist bzw. von dieser getragen wird.

Die Klinge 19 weist eine Schneide 20 mit einer Schneidkante 21 auf. Wie aus der Zeichnung zu erkennen ist, ist die Schneide 20 mit der Schneidkante 21 winklig ausgebildet derart, dass die Folie genau in den Winkel hineinläuft.

Des weiteren sind Folienbahnen 23, nämlich eine obere Folienbahn 23a und eine untere Folienbahn 23b, dargestellt. Diese sind symbolisch rechts und somit vor der Verschweißeinrichtung 11 mit Abstand zueinander vorgesehen. Dabei können eine oder beide Folienbahnen 23, wie dargestellt, von der Ebene 24 der Folienbahnen, wie sie unterbrochen dargestellt ist, abweichen.

Hinter der Verschweißeinrichtung 11 sind die Folienbahnen 23 miteinander verbunden und verlaufen in der Ebene 24 der Folienbahnen. Dann laufen sie gegen die Schneidkante 21 der Klinge 19 und werden getrennt. Das Trennen erfolgt in einen Bereich der verbundenen Folie 26 und den Überstand 27. Der Überstand 27 besteht im wesentlichen aus einem Bereich, der über die Verbindungsschweißung übersteht. Dabei ist zu beachten, dass die Verbindung der Folienbahnen 23 in der horizontalen Ebene 24 erfolgt. Das Trennen der Folienbahnen erfolgt in einer Ebene senkrecht dazu in seitlich nebeneinanderliegende Bereiche. Der Überstand 27 kann nach dem Abtrennen entweder seitlich neben die Einrichtung fallen oder aufgewickelt oder eingesaugt werden.

Die Schneide 20 mit der Schneidkante 21 kann, wie zuvor angesprochen worden ist, eine Beschichtung aufweisen. Eine solche Beschichtung kann dazu dienen, zum einen die Gleitreibung an der Schneide zu verringern. Zum anderen ist es vorteilhaft, wenn eine haftvermindernde oder haftvermeidende Beschichtung vorgesehen ist. In diesem Fall kann das Ankleben von erwärmten Folienbereichen an die Klinge reduziert oder vermieden werden.

Wie des weiteren aus der Zeichnung zu erkennen ist, gibt es für die erfindungsgemäße Verbindung der Klinge 19 mit der Heizung 15 durch die Wärmebrücke 18 verschiedene Möglichkeiten. Sollte die Heizung für eines oder beide der Verschweißräder weiter weg von der Trenneinrichtung 17 liegen, beispielsweise im Bereich des Einzugs der Folienbahnen 23, so ist durch die Wärmebrücke 18 eine größere Distanz zu überwinden. An sich ändert dies jedoch an der Verwirklichung des Erfindungsgedankens nichts.

Des weiteren ist es möglich, zumindest die Wärmebrücke 18, beispielsweise auch Teile der Klinge 19, mit einer thermischen Isolierung nach außen zu versehen derart, dass Wärmeverluste durch Wärmestrahlung oder Abkühlung reduziert werden können.

Anstelle einer Verschweißeinrichtung 11 mit Rädern könnte auch eine Verschweißeinrichtung mit umlaufenden, zum Teil beheizten Riemen vorgesehen sein. Auch hier ist für den Fachmann offensichtlich, dass eine erfindungsgemäße Trenneinrichtung mit einer Wärmebrücke zwischen Klinge und Heizung für die Verschweißeinrichtung vorgesehen sein kann.

Der Abstand zwischen dem Berührbereich der Verschweißräder, in welchem die Verschweißung der Folie stattfindet, und der Schneidkante ist zum einen durch geometrische Vorgaben bestimmt. Zum anderen kann bei bestimmten gewünschten Temperaturen der Folie beim Anliegen der Schneidkante in Verbindung mit der vorliegenden Schneidkantentemperatur die Temperatur über diesen Abstand variiert werden. Schließlich kühlt die Folie nach dem Verschweißen aufgrund ihrer Fläche wieder relativ schnell aus.

## Patentansprüche

1. Einrichtung zur Bearbeitung von Folienbahnen (23), mit einer Verschweißeinrichtung (11) zum Verbinden von zwei Lagen der Folienbahnen in einem länglichen Bereich miteinander und einer Trenneinrichtung (17) zum Bearbeiten oder Trennen der mittels der Verschweißeinrichtung verbundenen Folienbahnen (23), wobei die Verschweißeinrichtung eine Heizung (15) aufweist zum Verbinden der Folienbahnen, wobei die Trenneinrichtung (17) eine feststehende unbewegliche Klinge (19) mit einer Schneidkante (21) aufweist, wobei die Klinge beheizt ist, **dadurch gekennzeichnet, dass** die Klinge (19) wärmeleitend mit der Heizung (15) der Verschweißeinrichtung (11) verbunden ist, wobei die Wärmeleitung durch eine durchgehende Wärmebrücke (18) gebildet ist, die die Klinge (19) berührt, und wobei die Verschweißeinrichtung (11) umlaufende Verschweißmittel (12, 13) aufweist und eines der Verschweißmittel (12) über und eines der Verschweißmittel (13) unter der Ebene (24) der Folienbahnen (23) verläuft und diese beiden Verschweißmittel die Folienbahnen zwischen sich zusammendrücken.

2. Einrichtung nach Anspruch 1, **dadurch gekennzeichnet, dass** die Klinge (19) dauerbeheizt ist.

3. Einrichtung nach Anspruch 1, **dadurch gekennzeichnet, dass** die Wärmebrücke (18) Teil der Trenneinrichtung (17) oder der Klinge (19) ist.

4. Einrichtung nach einem der vorhergehenden Ansprüche, **dadurch gekennzeichnet, dass** die Wärmebrücke (18) Teil einer Halterung für die Klinge (19) ist.

5. Einrichtung nach einem der vorhergehenden Ansprüche, **dadurch gekennzeichnet, dass** die Klinge (19) mit der Schneidkante (21) durch die Folienbahnen (23) hindurchreicht.

6. Einrichtung nach einem der vorhergehenden Ansprüche, **dadurch gekennzeichnet, dass** die Schneidkante (21) zumindest teilweise schräg zu der Ebene (24) der Folienbahnen (23) verläuft, wobei vorzugsweise der Winkel der Schräge zwischen 10° und 50° beträgt, insbesondere zwischen 15° und 35°.

7. Einrichtung nach Anspruch 6, **dadurch gekennzeichnet, dass** die Schneidkante (21) in Durchlaufrichtung der Folienbahnen (23) schräg zu den Folienbahnen hin geneigt ist.

8. Einrichtung nach einem der vorhergehenden Ansprüche, **dadurch gekennzeichnet, dass** die Klinge (19), vorzugsweise die Schneidkante (21), mit einer Gleitbeschichtung oder Antihaftbeschichtung versehen ist.

9. Einrichtung nach einem der vorhergehenden Ansprüche, **dadurch gekennzeichnet, dass** die Trenneinrichtung (17) in Laufrichtung der Folienbahnen (23) kurz hinter den Verschweißmitteln (12, 13) angeordnet ist, vorzugsweise einige Zentimeter dahinter.

## Claims

1. Device for handling film webs (23), having a welding device (11) for joining two layers of film webs in an elongated area, and having a separating device (17) for handling or separating the film webs (23) joined by the welding device, said welding device having a heater (15) for joining the film webs, wherein the separating device (17) has a fixed, immovable blade means (19) with a cutting edge (22), said blade means being heated, **characterized in that** the blade means (19) is connected in heating conducting manner to the heater (15) of the welding device (11), the heat conduction being formed by a through heat bridge (18), which contacts the blade means (19), and in which the welding device (11) has rotating welding means (12, 13) and one of the welding means (12) runs over and one of the welding means (13) runs under the plane (24) of film webs (23) and said two welding means compress the film webs between them.

2. Device according to claim 1, **characterized in that** the blade means (19) is permanently heated.

3. Device according to claim 1, **characterized in that** the heat bridge (18) is part of the separating device (17) or the blade means (19).

4. Device according to one of the preceding claims, **characterized in that** the heat bridge (18) is part of a holder for the blade means (19).

5. Device according to one of the preceding claims, **characterized in that** the blade means (19) with cutting edge (21) extends through the film webs (23).

6. Device according to one of the preceding claims, **characterized in that** the cutting edge (21) is at least partly inclined to the plane (24) of film webs (23) and preferably the inclination angle is between 10 and 50°, particularly between 15 and 35°.

7. Device according to claim 6, **characterized in that** the cutting edge is inclined to the film webs (23) in the passage direction of the latter.

8. Device according to one of the preceding claims, **characterized in that** the blade means (19), preferably the cutting edge (21), is provided with a sliding or antistick coating.

9. Device according to one of the preceding claims, **characterized in that** the separating device (17) is positioned just behind the welding means (12, 13), preferably a few centimetres behind the same, in the running direction of the film webs (23).

## Revendications

1. Dispositif pour l'usinage de feuilles en continu (23), présentant un dispositif de soudage (11) pour le raccordement de deux couches des feuilles en continu dans une zone oblongue et un dispositif de coupe (17) pour l'usinage ou la coupe des feuilles en continu (23) raccordées par le dispositif de soudage, sachant que le dispositif de soudage présente un chauffage (15) pour le raccordement des feuilles en continu, sachant que le dispositif de coupe (17) présente une lame (19) à poste fixe et immobile avec une arête de coupe (21), sachant que la lame est chauffée, **caractérisé en ce que** la lame (19) est jointe au chauffage (15) du dispositif de soudage (11) avec une bonne conduction thermique, sachant que la conduction thermique est réalisée par un pont thermique (18) continu, qui touche la lame (19), et sachant que le dispositif de soudage (11) présente des organes de soudage (12, 13) rotatifs et qu'un des organes de soudage (12) passe au-dessus et un des organes de soudage (13) passe au-dessous du plan (24) des feuilles en continu (23) et que les feuilles en continu sont comprimées entre ces deux organes de soudage.

2. Dispositif d'après la revendication 1, **caractérisé en ce que** la lame (19) est chauffée de manière permanente.

3. Dispositif d'après la revendication 1, **caractérisé en ce que** le pont thermique (18) fait partie du dispositif de coupe (17) ou de la lame (19).

4. Dispositif d'après une des revendications précédentes, **caractérisé en ce que** le pont thermique (18) fait partie d'un support pour la lame (19)

5. Dispositif d'après une des revendications précédentes, **caractérisé en ce que** la lame (19) saille à travers les feuilles en continu (23) par son arête de coupe (21).

6. Dispositif d'après une des revendications précédentes, **caractérisé en ce que** l'arête de coupe (21) s'étend au moins en partie de façon oblique par rapport au plan (24) des feuilles en continu (23), sachant que l'angle de l'obliquité comporte de préférence une valeur entre 10° et 50°, notamment entre 15° et 35°.

7. Dispositif d'après la revendication 6, **caractérisé en ce que** l'arête de coupe (21) est inclinée en direction de passage des feuilles en continu (23) obliquement par rapport aux feuilles en continu.

8. Dispositif d'après une des revendications précédentes, **caractérisé en ce que** la lame (19) et de préférence l'arête de coupe (21) est munie d'un revêtement de glissement ou d'une couche antiadhésive.

9. Dispositif d'après une des revendications précédentes, **caractérisé en ce que** le dispositif de coupe (17) est disposé peu après les organes de soudage (12, 13) dans le sens machine des feuilles en continu, de préférence à quelques centimètres de distance.
